**Europäisches Patentamt**

**European Patent Office**

**Office européen des brevets**

(11) Veröffentlichungsnummer: **0 208 842**
A2

(12) ## EUROPÄISCHE PATENTANMELDUNG

(21) Anmeldenummer: 86104962.5

(22) Anmeldetag: 11.04.86

(51) Int. Cl.⁴: **B 23 K 35/30**, B 23 K 35/00,
C 04 B 37/02

(30) Priorität: 12.06.85 DE 3520988

(43) Veröffentlichungstag der Anmeldung: 21.01.87
Patentblatt 87/4

(84) Benannte Vertragsstaaten: AT CH DE FR GB IT LI SE

(71) Anmelder: Kernforschungszentrum Karlsruhe GmbH,
Weberstrasse 5 Postfach 3640, D-7500 Karlsruhe 1 (DE)

(72) Erfinder: Heinzel, Volker, Dr., Am Höllenacker 9,
D-7515 Linkenheim (DE)
Erfinder: Paterok, Lienhard, Dr., Alpenstrasse 33,
D-7590 Friedrichshafen (DE)
Erfinder: Huber, Rolf, G.-Jacobs-Hütte
Linkenheimer-Allee, D-7500 Karlsruhe (DE)
Erfinder: Schub, Ingeborg, Nachtweide 5,
D-6729 Wörth-2 (DE)

(54) **Verfahren zum Herstellen einer festen Bindung zweier Teile.**

(57)   Die Erfindung betrifft ein Verfahren zum Herstellen einer festen Bindung zweier Teile, von denen mindestens das eine Teil

a) aus einem Hartmetall mit einer oder mehreren Verschleißschutzschicht(en) besteht, wobei die zuletzt aufgebrachte Schicht aus einem Nitrid oder Carbonitrid der Metalle der 4. und/oder 5. Nebengruppe des Periodensystems der Elemente gebildet wird, oder

b) auf reinen Nitriden oder Carbonitriden der Metalle der 4. und/oder 5. Nebengruppe des Periodensystems der Elemente und das andere Teil aus unbeschichtetem oder beschichtetem Metall besteht unter Verwendung eines Ni-haltigen Lotes.

Der Erfindung liegt die Aufgabe zugrunde, solche Werkzeugteile maßhaltig und gut wärmeleitend auf Werkzeugträgern zu befestigen, ohne daß eine Einbuße im Hinblick auf die Schnittleistung in Kauf genommen werden muß. Dies wird dadurch erreicht, daß ein Lot verwendet wird aus der Gruppe

Ni-Cr-Legierung,

Au-Ni-Legierung

mit einem Schmelzpunkt unterhalb der Temperatur bei der ein Lösungsangriff erfolgt, der zur Strukturänderung oder Änderung der Materialeigenschaften des Hartmetalles und/oder zur Änderung der Lot-Materialeigenschaften führt.

Verfahren zum Herstellen einer festen Bindung zweier Teile

---

Die Erfindung betrifft ein Verfahren zum Herstellen einer festen Bindung zweier Teile, von denen mindestens das eine Teil

a) aus einem Hartmetall mit einer oder mehreren Verschleißschutzschicht(en) besteht, wobei die zuletzt aufgebrachte Schicht aus einem Nitrid oder Carbonitrid der Metalle der 4. und/oder 5. Nebengruppe der Periodensystems der Elemente gebildet wird, oder

b) aus reinen Nitriden oder Carbonitriden der Metalle der 4. und/oder 5. Nebengruppe des Periodensystems der Elemente besteht

und das andere Teil aus unbeschichtetem oder beschichtetem Metall besteht unter Verwendung eines nickelhaltigen Lotes.

Voraussetzung für hohe Arbeitsleistung eines Werkstücks ist die sichere, mechanisch belastbare Einspannung. Bei Wärmeentwicklung während des betrieblichen Einsatzes muß die Wärme abgeleitet werden, wozu sich die Auflagefläche anbietet.

Hartmetallschneidplatten können auf Werkzeugträger aufgelötet werden, Werkzeuge mit TiN oder Ti(C,N) an der Oberfläche dagegen konnten bisher nicht gelötet werden. TiN-beschichtete Werkzeugteile wurden durch Klemmvorrichtungen auf den Werkzeugträgern befestigt, oder es mußte alternativ auf eine äußere TiN-Beschichtung verzichtet werden. Die Klemmvorrichtungen sind aufwendig, weniger maßhaltig und leiten die Wärme verhältnismäßig schlecht ab. Wird auf die äußere TiN-Schicht des Werkzeugsteils verzichtet, so wird die Schnittleistung reduziert.

- 2 -

Der Erfindung liegt daher die Aufgabe zugrunde, mit Nitriden oder Carbonitriden der Metalle der 4. und/oder 5. Nebengruppe des Periodensytems der Elemente beschichtete Werkzeugteile aus Hartmetall oder aus solchen Nitriden oder Carbonitriden bestehende Werkzeugteile maßhaltig und gut wärmeleitend auf Werkzeugträgern befestigen zu können, ohne daß eine Einbuße im Hinblick auf die Schnittleistung in Kauf genommen werden muß.

Die Aufgabe wird erfindungsgemäß dadurch gelöst, daß ein Lot verwendet wird aus der Gruppe

    Ni-Cr-Legierung,
    Au-Ni-Legierung

mit einem Schmelzpunkt unterhalb der Temperatur bei der ein Lösungsangriff erfolgt, der zur Strukturänderung oder Änderung der Materialeigenschaften des Hartmetalles und/oder zur Änderung der Lot-Materialeigenschaften führt. Teile, insbesondere Werkzeugteile, mit Oberflächen aus TiN oder Ti(C,N) können mit metallischen oder ebenfalls mit Oberflächen, die mit den genannten Materialien beschichtet sind, mit Hilfe des erfindungsgemäßen Verfahrens verbunden werden bzw. die verschiedenen Teile aneinander befestigt werden. Dabei spielt es keine Rolle, ob die Nitrid- oder Carbonitrid-Schichten einlagig oder mehrlagig oder mit einer Zwischenschicht von $Al_2O_3$ vorliegen. Die Lötverbindung kann unter Vakuum hergestellt oder unter Sauerstoff-freiem Schutzgas durchgeführt werden. Vorteilhafterweise wird die Lötverbindung mit Hilfe einer Hochfrequenzheizung hergestellt.

Es ist zwar ein Verfahren zum Herstellen einer Lötverbindung zwischen einem der Metalle der 4. und 5. Nebengruppe einerseits und einem der Eisenmetalle oder einer ein Eisenmetall enthaltenden Legierung andererseits unter Verwendung von Nickelbasisloten bekannt (DE-PS 32 48 023 C1), bei welchem vor dem Löten mindestens auf dem aus einem hochschmelzenden

- 3 -

Metall oder einer hochschmelzenden Legierung bestehenden
Teil im Bereich des Lotes eine mindestens einlagige Diffusionssperrschicht durch Carburierung und/oder Nitrierung
(nitriding) der Oberfläche erzeugt wird, doch wird dort das
Löten von Hartmetallen mit einer Verschleißschutzschicht aus
einem Nitrid oder einem Carbonitrid eines Metalles aus der
4. oder 5. Nebengruppe nicht angesprochen. Da in dem Verfahren nach der Deutschen Patentschrift Nickelbasislote allgemein verwendbar sind (es wird nur ein Lot mit der kommerziellen Bezeichnung Nicrobraz 50 erwähnt, welches ein Ni-Cr-
P-Lot ist), ist bei dem bekannten Verfahren eine bestimmte
Auswahl eines Lotes im Hinblick auf seine chemische Zusammensetzung (außer dem Ni-Gehalt) und auf seine Eigenschaften
(z. B. Schmelzpunkt etc.) nicht erforderlich.

Ein Hartlot zur Herstellung von warmfesten,
korrosionsbeständigen Hartlötverbindungen, welches aus
1 % bis 96 % Gold,
1 % bis 72 % Palladium,
Rest 2 % bis 61 % Nickel und/oder Chrom
besteht, ist aus der Deutschen Auslegeschrift 15 08 306
bekannt. Es wurde jedoch dort nur über Lötverbindungen zwischen Metallen bzw. Legierungen berichtet und die Möglichkeit der Verwendung bei gesinterten Carbiden erwähnt. Die
dort aufgeführten Temperaturlinien liegen zwischen 982° C
und 1492° C. Weder Lote für tiefere Löttemperaturen noch das
Löten beschichteter Hartmetalle werden dort angesprochen.

Ein Verfahren zur Herstellung von gebundenen Hartlegierungen, bei welchem eine dünne Lage eines Eisengruppenmetalles
oder dessen Legierung als Hartlot zwischen die in Berührung
gebrachten Oberflächen von unbeschichteten Hartlegierungen mittels eines hochenergetischen Strahls zum Schmelzen und in einer Nutform zum Erstarren gebracht wird, ist in der Deutschen Offenlegungsschrift DE 32 38 319 A1 vorgeschlagen worden.

Feste Bindungen zweier Teile, von denen mindestens das eine Teil aus einem Nitrid- oder Carbonitrid-beschichteten Hartmetall besteht, wurden in der DE-OS nicht angesprochen.

Im erfindungsgemäßen Verfahren wird ein Aufschmelzen des Lotes vermieden, um die Gefahr eines Lösungsangriffs, der zur Strukturänderung oder zur Änderung der Materialeigenschaften des Hartmetalles und/oder zur Änderung der Lot-Materialeigenschaften führen könnte, von vornherein zu eliminieren.

Mit dem erfindungsgemäßen Verfahren können Schneidwerkzeuge auf Werkzeugträgern aufgelötet werden oder Düsen in Düsenträgern. Schneidwerkzeuge, Ziehdüsen, Stanz- oder Prägewerkzeuge, die ein- oder mehrlagig beschichtet sind, können auf Schnellarbeitsstähle oder Werkzeugstähle etc. aufgelötet werden. Die Vorteile des erfindungsgemäßen Verfahrens bestehen insbesondere darin, daß die Teile mit den genannten Oberflächenbeschichtungen nach dem Zusammenlöten mechanisch belastbar sind und eine gute Wärmeableitung aufweisen. Schliffbilder haben erwiesen, daß ein zweilagig beschichtetes Hartmetallblättchen (zunächst mit TiC und darauf als Deckschicht mit TiN beschichtet), welches auf einem Halter aus einem Schnelldrehstahl sowie in einem anderen Versuch auf einem rostfreien Stahl befestigt worden ist, durch Lötung unter Vakuum mit einem Lot aus 84 Gew.-% Gold und 16 Gew.-% Nickel (dieses Lot hat einen Schmelzpunkt von 760° C) die der Erfindung zugrundeliegende Aufgabe in ausgezeichne-

- 5 -

ter Weise löst. Dieses Lot besitzt gute Flußeigenschaften ohne die Neigung zur Legierungs-Bildung mit beispielsweise TiN. Bei Verarbeiten im Vakuum ist kein Flußmittel-Zusatz erforderlich. Andere Nickellote ohne Goldanteile, jedoch mit höheren Löttemperaturen, insbesondere zwischen 925° C und 980° C (beispielsweise Ni-Cr-Legierungen), haben sich ebenfalls als geeignet erwiesen. Beide Teile wurden vor dem jeweiligen Löten entfettet. Die Lötung erfolgte mittels Hochfrequenzheizung im Vakuumofen. Zur Beurteilung der Lötung wurde die Lötstelle der Verbindung auf dem Schnellarbeitsstahl freigeschnitten und der Trennschnitt für die metallurgische Beobachtung präpariert. Die Lötstelle wurde im Rasterelektronenmikroskop aufgenommen. Das Bild der Lötstelle ließ folgendes Ergebnis erkennen:

Der Rand des TiN zum Lot hin zeigt die typische Oberflächenstruktur des TiN. Die Spitzen sind erhalten geblieben, so daß kein feststellbarer Angriff durch das Lot erfolgte. Trotzdem werden die Spitzen vollständig vom Lot eingebettet und liefern damit die Voraussetzung für eine mechanisch belastbare Verbindung. Der Lotspalt ergab sich mit einer Breite von 25 µm, wobei das Lot über eine Strecke von ca. 10 mm in den Spalt eingedrungen war.

Die gleiche Lötung wurde durch ein Lichtmikroskop fotografiert. Die Aufnahme zeigte folgendes:

Die eindeutig gelbe Farbe des TiN bestätigte ebenfalls, daß das TiN keine Veränderung erfahren hat.

Damit ist erwiesen, daß sich das erfindungsgemäße Lötverfahren zum Aufbringen TiN-beschichteter Teile auf metallische Oberflächen eignet. Ti(C,N) wird besser benetzt, wie Experimente zeigten, und kann daher leicht mit dem genannten Lot befestigt werden.

Kernforschungszentrum                   Karlsruhe, den 26. März 86
Karlsruhe GmbH                          PLA 8531 Gl/he


Patentanspruch:

Verfahren zum Herstellen einer festen Bindung zweier Teile,
von denen mindestens das eine Teil

a) aus einem Hartmetall mit einer oder mehreren Verschleißschutzschicht(en) besteht, wobei die zuletzt aufgebrachte
   Schicht aus einem Nitrid oder Carbonitrid der Metalle der
   4. und/oder 5. Nebengruppe der Periodensystems der Elemente gebildet wird, oder

b) aus reinen Nitriden oder Carbonitriden der Metalle der 4.
   und/oder 5. Nebengruppe des Periodensystems der Elemente
   besteht

und das andere Teil aus unbeschichtetem oder beschichtetem
Metall besteht unter Verwendung eines nickelhaltigen Lotes,

dadurch gekennzeichnet, daß

ein Lot verwendet wird aus der Gruppe
  Ni-Cr-Legierung,
  Au-Ni-Legierung
mit einem Schmelzpunkt unterhalb der Temperatur bei der ein
Lösungsangriff erfolgt, der zur Strukturänderung oder Änderung der Materialeigenschaften des Hartmetalles und/oder zur
Änderung der Lot-Materialeigenschaften führt.